# DEMANDE DE BREVET EUROPEEN

(11) **EP 1 621 714 A1**
(43) Date de publication de la demande: **01.02.2006**
(21) Numéro de dépôt: 05104001.2
(22) Date de dépôt: 12.05.2005
(51) Int. Cl.: E05F 15/20, B60H 3/00

(54) **Dispositif de fermeture motorisé d'un ouvrant de véhicule automobile, tel qu'un toit ouvrant ou une vitre de portière**

(30) Priorité: 29.06.2004 FR 0407215
(71) Demandeur: DAV, 94000 Creteil (FR)
(72) Inventeur: Ducruet, René, 74270, Cranves-Sales (FR); Laurent, Patrice, Rés. Le Clos Vully, 74250, Viuz en Sallaz (FR)
(74) Mandataire: Croonenbroek, Thomas Jakob

(57) **Abrégé**

La présente invention a pour objet un dispositif de fermeture motorisé (1) d'un ou de plusieurs ouvrant(s) de véhicule automobile tel qu'un toit ouvrant et/ou une vitre, comprenant pour chaque ouvrant un moteur de déplacement (3) dudit ouvrant entre des positions ouvertes et une position fermée et un module de commande du ou des moteur(s) (3) pour ouvrir ou fermer le ou les ouvrant(s) de façon motorisée. Le dispositif comprend au moins un capteur de pollution (7) apte à détecter la présence d'un ou de plusieurs polluants dans l'air et relié audit module de commande de manière à enclencher la fermeture de l'ensemble des ouvrants du véhicule automobile lorsque le niveau de pollution détecté dépasse un seuil prédéfini.

## Description

La présente invention est relative à dispositif de fermeture motorisé d'un ouvrant de véhicule automobile tel qu'un toit ouvrant ou une vitre de portière.

La pollution de l'air est un problème de plus en plus aigu à l'échelle de la planète et une telle pollution est particulièrement constatée par les automobilistes au cours de leurs trajets.

De nombreux véhicules disposent d'un toit ouvrant et de vitres commandées électriquement, beaucoup de conducteurs de ces véhicules aiment laisser ces éléments ouverts en conduisant, pour ressentir la vitesse ou simplement profiter de l'air libre, en dehors de toute climatisation.

Les conducteurs qui circulent dans ces conditions sont cependant amenés, en fonction des conditions extérieures, à obturer précipitamment ces ouvertures, afin d'éviter des odeurs nauséabondes et divers polluants plus ou moins nocifs.

Pour ne citer que quelques exemples d'odeurs désagréables tout un chacun a pu constater au cours de ses déplacements en voiture les inconvénients induits par les gaz d'échappement des véhicules diesels mal réglés, en particulier de véhicules lourds, les fumées de combustion de brûlis, les odeurs dans les tunnels, ou encore les émanations dans le voisinage de sites industriels ou d'élevages porcins.

Diverses pollutions automobiles, moins facilement perceptibles, sont également présentes dans l'environnement immédiat du conducteur et peuvent s'avérer parfois plus nocives pour sa santé, pour ne donner que quelques exemples significatifs il peut être cité les hydrocarbures imbrûlés des moteurs ou les dérivés cancérigènes formés, tels que les produits dérivés du benzène, le gaz carbonique et le monoxyde de carbone.

Les conducteurs subissent par ailleurs les éléments environnementaux locaux plus généraux tels que la présence en concentration excessive d'ozone, d'oxydes d'azote, de dioxyde de soufre ou d'autres composés présents dans l'atmosphère et liés aux conditions climatiques et urbaines. La présence de pollens, de poussières et de divers éléments allergisants peut également engendrer des désagréments chez de nombreuses personnes.

Lorsque le véhicule disposant d'un toit ouvrant et de vitres en position d'ouverture traverse une zone de pollution précédemment décrite, le conducteur souhaite obturer immédiatement son véhicule, ce qui n'est pas toujours réalisable compte tenu des conditions de circulation et de l'attention qui doit être portée à la conduite.

Par ailleurs certains polluants tels que les oxydes d'azote, l'ozone ou les pollens ne sont décelables que par leurs effets induits, lorsque le conducteur est incommodé tousse ou ressent une gêne respiratoire, ce qui est notablement trop tard pour que la fermeture de l'habitacle vis à vis de l'atmosphère extérieure protège les passagers du véhicule.

Ainsi dans la majorité des situations le délai pour que l'obturation du toit ouvrant et des vitres soit effective est systématiquement trop long et la pollution se trouve piégée à l'intérieur du véhicule pour une durée notable.

Lorsque le conducteur a procédé au verrouillage des ouvertures et que l'alerte pollution semble passée le retour des ouvertures à la position antérieure est souhaitée, par exemple dans une position entrebâillée, cependant le conducteur ne dispose d'aucun moyen pour déterminer si la pollution extérieure est devenue acceptable ou pas.

La présente invention vise à apporter une solution pour permettre à un utilisateur de s'affranchir des nuisances extérieures des polluants.

A cet effet, l'invention a pour objet un dispositif de fermeture motorisé d'un ou de plusieurs ouvrant(s) de véhicule automobile tel qu'un toit ouvrant et/ou une vitre, comprenant pour chaque ouvrant un moteur de déplacement dudit ouvrant entre des positions ouvertes et une position fermée et un module de commande du ou des moteur(s) pour ouvrir ou fermer le ou les ouvrant(s) de façon motorisée, caractérisé en ce qu'il comprend au moins un capteur de pollution apte à détecter la présence d'un ou de plusieurs polluants dans l'air et relié audit module de commande de manière à enclencher la fermeture de l'ensemble des ouvrants du véhicule automobile lorsque le niveau de pollution détecté dépasse un seuil prédéfini.

D'autres caractéristiques et avantages de l'invention ressortiront de la description suivante, donnée à titre d'exemple, sans caractère limitatif, en regard de la seule figure annexée représentant un schéma synoptique d'un dispositif de fermeture motorisé selon l'invention.

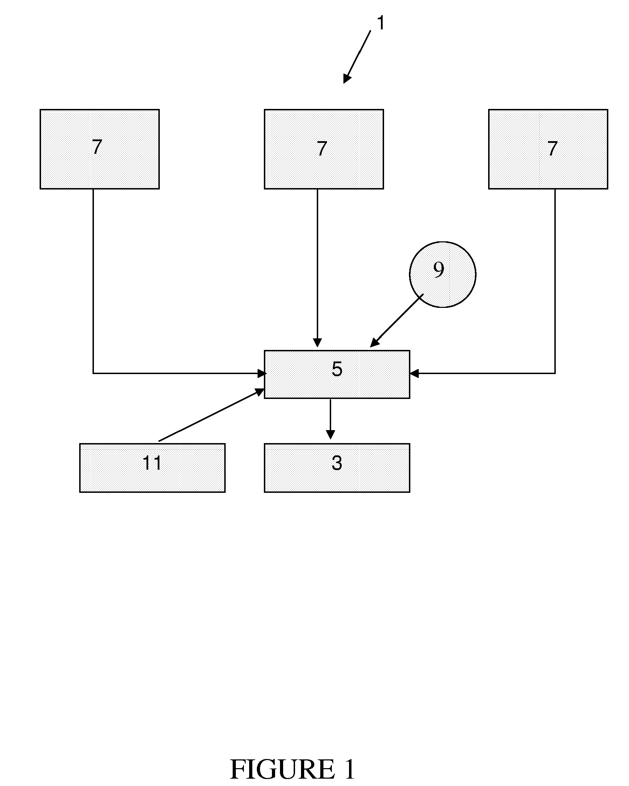

Sur la figure 1 est représenté un dispositif 1 de fermeture motorisé d'un ou de plusieurs ouvrant(s) non représentés de véhicule automobile tel qu'un toit ouvrant et/ou une vitre.

Ce dispositif 1 comprenant pour chaque ouvrant un moteur 3 de déplacement dudit ouvrant entre des positions ouvertes et une position fermée et un module de commande 5 du ou des moteur(s) pour ouvrir ou fermer le ou les ouvrant(s) de façon motorisée.

Avantageusement, le dispositif 1 comprend au moins un capteur de pollution 7 apte à détecter la présence d'un ou de plusieurs polluants dans l'air. Sur la figure, on a représenté un dispositif comprenant trois capteurs de pollution 7.

Le ou les capteurs 7 peuvent être localisés à l'extérieur de l'habitacle pour détecter le niveau de pollution extérieure.

Cette dipositition est généralement choisie pour des polluants qui ne peuvent pas être filtrés par le filtre d'habitacle du système d'arrivée d'air frais du véhicule.

Selon une variante, le capteur est localisé à l'intérieur de l'habitacle, de préférence à proximité de l'utilisateur ou encore à l'extérieur et à l'intérieur.

Le dispositif 1 est relié audit module de commande 5 de manière à enclencher la fermeture de l'ensemble des ouvrants du véhicule automobile lorsque le niveau de pollution détecté dépasse un seuil prédéfini.

En effet, lorsqu'un utilisateur roule avec au moins un ouvrant ouvert et s'avance dans une zone polluée, le niveau de pollution est détecté et lorsque celui-ci n'est pas admissible, l'ouvrant ou tous les ouvrants se ferment de façon automatique de manière à réduire au maximum l'exposition de l'utilisateur aux nuisances des polluants. Avantageusement, le conducteur est alerté par un voyant lumineux ou un signal sonore de la fermeture imminente des ouvrants.

Selon une variante plus evoluée, le dispositif est apte à commuter de plus le système d'arrivée d'air frais de l'habitacle en mode recirculation. L'utilisateur se trouve donc dans un environnement protégé de l'extérieur.

Selon une autre variante le dispositif est aussi apte à envoyer un signal de commande de mise en marche d'un dispositif assainisseur de l'air de l'habitacle ou son renouvellement avec un air non pollué.

Une autre variante selon l'invention consiste à prévoir un dispositif complémentaire de neutralisation de la pollution détectée et/ou d'assainissement de l'air de l'habitacle lorsque celui-ci a été constaté pollué. Il est par exemple envisagé de chasser l'air vicié au moyen d'une réserve d'air transportée par le véhicule, tel que cela est réalisé dans des sas. Il peut aussi être envisagé de neutraliser les odeurs au moyen d'éléments diffusés dans l'air, tel que par exemple des parfums ou des agents désodorisants. Des agents neutralisants de pollution peuvent être injectés dans l'habitacle au travers du circuit d'aération ou au moyen d'un circuit spécifique.

Le capteur de pollution 7 est apte à détecter au moins un, voir plusieurs des polluants de la liste suivante : la poussière, des hydrocarbures, du monoxyde ou du dioxyde de carbone, des oxydes d'azote, de l'ozone, des dérivés du soufre, des pollens, des aérosols, des odeurs, des fumées, des dérivés benzéniques ou des polluants atmosphériques divers présents principalement en zones urbaines ou industrielles.

Le niveau de pollution et en particulier le seuil de niveau de pollution enclenchant la fermeture des ouvrants est défini par un ensemble de valeurs seuils associées à chaque polluant pouvant être détecté par le ou les capteurs de polluants.

Ainsi, si on a plusieurs capteurs pouvant détecter un seul ou plusieurs polluants, le niveau de pollution détecté dépasse un seuil prédéfini enclenchant la fermeture des ouvrants lorsqu'au moins une valeur de seuil d'un seul polluant dépasse sa valeur seuil prédéfinie.

On a constaté que la perception d'une nuisance et ou pollution varie d'une personne à une autre. Ainsi, dans une variante préférée, le dispositif comprend un organe de commande 9 permettant d'ajuster à l'utilisateur le niveau de seuil de pollution, en particulier selon sa propre perception en ce qui concerne les nuisances olfactives et/ou cutanées. Un tel organe de commande peut être un bouton de réglage ou autre.

Lorsque l'utilisateur quitte aussi la zone polluée, par exemple après l'avoir traversée ou, si c'est un poids lourds en face crachant des particules de suie de diesel, après avoir dépassé ce véhicule, l'utilisateur souhaite retrouver son confort d'avant.

A cet effet, le dispositif comprend de plus une mémoire 11 pour mémoriser la position de chaque ouvrant avant l'enclenchement de la fermeture de chaque ouvrant et le module de commande 5 est apte à commander l'ouverture des ouvrants aux positions mémorisées lorsque le niveau de pollution est à nouveau inférieur au seuil prédéfini.

On comprend donc les avantages de la présente invention qui permettent pour un utilisateur de traverser confortablement, sans nuisances des zones polluées et de retrouver ensuite le réglage initial d'ouverture des ouvrants.

## Revendications

1. Dispositif de fermeture motorisé (1) d'un ou de plusieurs ouvrant(s) de véhicule automobile tel qu'un toit ouvrant et/ou une vitre, comprenant pour chaque ouvrant un moteur de déplacement (3) dudit ouvrant entre des positions ouvertes et une position fermée et un module de commande (5) du ou des moteur(s) pour ouvrir ou fermer le ou les ouvrant(s) de façon motorisée, le dispositif comprenant en outre au moins un capteur de pollution (7) apte à détecter la présence d'un ou de plusieurs polluants dans l'air et relié audit module de commande de manière à enclencher la fermeture de l'ensemble des ouvrants du véhicule automobile lorsque le niveau de pollution détecté dépasse un seuil prédéfini, **caractérisé en ce qu'**il comprend une mémoire (11) pour mémoriser la position de chaque ouvrant avant l'enclenchement de la fermeture de chaque ouvrant et **en ce que** le module (5) est apte à commander l'ouverture des ouvrants aux positions mémorisées lorsque le niveau de pollution est à nouveau inférieur au seuil prédéfini.

2. Dispositif selon la revendication 1, **caractérisé en ce qu'**un capteur (7) est placé à l'intérieur de l'habitacle pour détecter la pollution à l'intérieur du véhicule.

3. Dispositif selon la revendication 1 ou 2, **caractérisé en ce qu'**un capteur (7) est placé à l'extérieur de l'habitacle pour détecter la pollution à l'extérieur du véhicule.

4. Dispositif selon l'une quelconque des revendications précédentes, **caractérisé en ce que** le niveau de pollution est défini par un ensemble de valeurs seuils associées à chaque polluant pouvant être détecté par le ou les capteurs de polluants.

5. Dispositif selon la revendication 4, **caractérisé en ce que** le niveau de pollution détecté dépasse un seuil prédéfini lorqu'au moins une valeur de seuil d'un polluant dépasse sa valeur seuil prédéfinie.

6. Dispositif selon l'une quelconque des revendications 1 à 5, **caractérisé en ce que** le capteur de pollution (7) est apte à détecter au moins un des polluants de la liste suivante : la poussière, des hydrocarbures, du monoxyde ou du dioxyde de carbone, des oxydes d'azote, de l'ozone, des dérivés du soufre, des pollens, des aérosols, des odeurs, des fumées, des dérivés benzéniques ou des polluants atmosphériques divers présents principalement en zones urbaines ou industrielles.

7. Dispositif selon l'une quelconque des revendications précédentes, **caractérisé en ce qu'**il comprend un organe de commande (9) permettant d'ajuster à l'utilisateur le niveau de seuil de pollution, en particulier selon sa propre perception en ce qui concerne les nuisances olfactives et/ou cutanées.

8. Dispositif selon l'une quelconque des revendications précédentes, **caractérisé en ce qu'**il est apte à commuter le système d'arrivée d'air de l'habitacle en mode recirculation.

9. Dispositif selon l'une quelconque des revendications précédentes, **caractérisé en ce qu'**il est apte à envoyer un signal de commande de mise en marche d'un dispositif assainisseur de l'air de l'habitacle ou son renouvellement avec un air non pollué.
